# EUROPEAN PATENT APPLICATION

(11) **EP 2 752 816 A1**
(43) Date of publication of application: **09.07.2014**
(21) Application number: 14150288.0
(22) Date of filing: 07.01.2014
(51) Int. Cl.: G06T 7/20, H04N 5/232

(54) **Method for processing an image and an electronic device thereof**

(30) Priority: 08.01.2013 US 201313736317
(71) Applicant: Samsung Electronics Co., Ltd, Gyeonggi-do 443-742 (KR)
(72) Inventor: Bahadirov, Izzatulla, Kendall Park, NJ New Jersey 08824 (US)
(74) Representative: Nederlandsch Octrooibureau

(57) **Abstract**

An apparatus and method for object tracking during image capture are provided. The method includes identifying an object of interest in an original camera image, detecting movement of a mobile terminal performing image capture, and tracking the object of interest in subsequent camera images using the detected movement of the mobile terminal.

## Description

### BACKGROUND OF THE INVENTION

### 1. Field of the Invention:

The present invention relates to an apparatus and method for processing an image.

### 2. Description of the Related Art:

Mobile terminals are developed to provide wireless communication between users. As technology has advanced, mobile terminals now provide many additional features beyond simple telephone conversation. For example, mobile terminals are now able to provide additional functions such as an alarm, a Short Messaging Service (SMS), a Multimedia Message Service (MMS), E-mail, games, remote control of short range communication, an image capturing function using a mounted digital camera, a multimedia function for providing audio and video content, a scheduling function, and many more. With the plurality of features now provided, a mobile terminal has effectively become a necessity of daily life.

Mobile terminals according to the related art include camera applications for performing the image capturing function using a mounted digital camera. Generally, the camera applications according to the related art allow the application of image-wide processing to photos or videos (e.g., collectively images) captured by the digital camera. For example, the camera applications according to the related art allow for the processing the originally captured image so as to appear as a black and white image, the introduction of sepia effects, the introduction of solar effects, and the like. Features of camera applications often involve interaction with a particular area of an image which usually also leads to image-wide adjustments. For example, one such feature is a "touch-to-focus" feature. The "touch-to-focus" feature allows a user to select a part of the image that the camera should focus. Such a selection is often made by touching the corresponding object in the viewfinder. Selection is generally made through a touch input to a touchscreen displaying the viewfinder.

Camera applications according to the related art also generally allow for post-production processing of a captured image (e.g., after the image has been captured). Oftentimes, when a captured image is processed, the processing is only directed to a portion of the captured image (e.g., local retouching). Local retouching is often difficult to perform on a mobile terminal because of the small screen on which the image is displayed. Further, some information generated during the capturing of the image may no longer be available at the time of post-production processing. For example, if a user wants to "mark" (e.g., identify) a particular object in the image and keep the particular object "marked" while capturing a video, it may be difficult to automate such processing of the video image in post-production processing. Indeed, to process the video image in post-production, each frame would require separate editing. Therefore, in a camera application according to the related art, in such an example, a user would be required to edit each frame of the video image during post-production to "mark" the particular object throughout the series of frames constituting the video image. As an example, one type of "marking" to a video image may include blurring a face or a license plate captured in the video image.

Accordingly, there is a need for an apparatus and method for providing an improved tracking of an object in a mobile terminal.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and method for object tracking during image capture.

In accordance with an aspect of the present invention, a method for object tracking during image capture is provided. The method includes identifying an object of interest in an original camera image, detecting movement of a mobile terminal performing image capture, and tracking the object of interest in subsequent camera images using the detected movement of the mobile terminal.

In accordance with another aspect of the present invention, an apparatus for object tracking during image capture is provided. The apparatus includes a touchscreen configured to receive a touch input, a camera unit configured to capture a camera image, and at least one controller configured to identify an object of interest in an original camera image, to detect movement of the apparatus, and to track the object of interest in subsequent camera images using the detected movement of the apparatus.

In accordance with another aspect of the present invention, a computer readable storage medium is provided. The computer readable storage medium includes identifying an object of interest in an original camera image, detecting movement of a mobile terminal performing image capture, and tracking the object of interest in subsequent camera images using the detected movement of the mobile terminal.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a flowchart illustrating a method for tracking an object during image capture according to an exemplary embodiment of the present invention; and
FIG. 2 is a block diagram schematically illustrating a configuration of a mobile terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention include an apparatus and method for object tracking during image capture. For example, an "object of interest" on a camera image (e.g., a preview image, a photo image, a video image, and the like) may be tracked to facilitate processing of the camera image. Such tracking of an object may allow for automated processing of the camera image and a more consistent processing of the camera image.

According to exemplary embodiments of the present invention, a user may identify at least one object of interest in a camera image. The object of interest may be tracked to facilitate processing on a camera image, and more specifically to facilitate processing on the object of interest captured in the camera image. According to exemplary embodiments of the present invention, the at least one object of interest in the camera image may be automatically identified by the mobile terminal.

According to exemplary embodiments of the present invention, a mobile terminal may include at least one sensor for detecting the change in the position of the mobile terminal. The detected change in the position of the mobile terminal may be analyzed to determine a corresponding change in position of the object of interest. For example, according to exemplary embodiments of the present invention, the mobile terminal may determine a change in position of the optical axis of a camera. For example, the mobile terminal may monitor the coordinates of the optical axis using Cartesian (x,y) co-ordinates and the like.

According to exemplary embodiments of the present invention, the mobile terminal may approximate a position of the object of interest (e.g., as a function of time) based on the change in position of the optical axis of the camera. For example, when an object of interest is identified, the camera may store coordinates associated with an offset of the object of interest. As the mobile terminal (and correspondingly the camera) move, the change in position is determined and tracked, and the location of the object of interest is approximated based on the stored coordinates associated with an offset of the object of interest in conjunction with the movement data associated with the change in position.

According to exemplary embodiments of the present invention, the mobile terminal may store information associated with the movement or change in position of the mobile terminal or optical axis of the camera operatively mounted thereon, and associate the information associated with such a movement or change with a corresponding camera image or frame thereof. Accordingly, efficient post-production processing may be undertaken (e.g., to an object of interest) so as to ensure that consistent post-production effects are provided frame-to-frame. According to exemplary embodiments of the present invention, the association of information corresponding to the movement or change in position of the mobile terminal or optical axis of the camera with a camera image (e.g., a frame) may provide for an accurate first approximation as to the location of the object of interest in a specific camera image (e.g., frame). According to exemplary embodiments of the present invention, statistical analysis may be performed on the specific camera image to more accurately locate the object of interest. For example, image data within the first approximation as to the location of the object of interest may be compared with image data associated with the object of interest in the camera image in which the object of interest was originally (or previously) identified.

According to exemplary embodiments of the present invention, the mobile terminal may monitor the movement or change in position of the mobile terminal or optical axis of the camera operatively mounted thereon using at least one sensor. For example, according to exemplary embodiments of the present invention, the at least one sensor may include a gyroscope, an accelerometer, a magnetometer, a barometer, and the like.

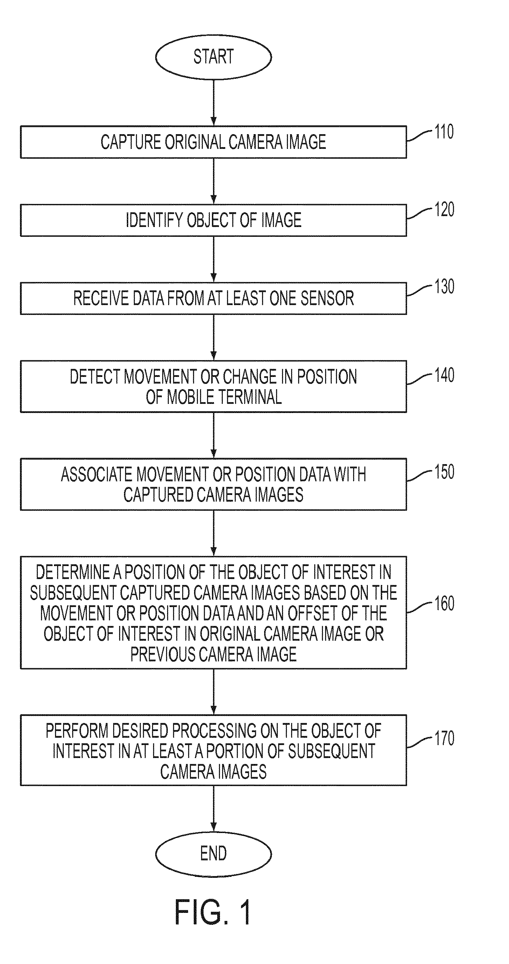

FIG. 1 is a flowchart illustrating a method for tracking an object during image capture according to an exemplary embodiment of the present invention.

Referring to FIG. 1, when the mobile terminal executes a camera application, the mobile terminal captures an original camera image (e.g., a preview image, a photo, a video, and the like) at step 110. For example, the mobile terminal displays a live preview when the camera application is started.

At step 120, the mobile terminal identifies at least one object of interest in the original camera image. For example, the mobile terminal may receive a user input identifying the object of interest. The user input may be a touch input that is input to a touchscreen. The user may paint over the object so as to make the selection area corresponding to the identified object of interest larger. As another example, the mobile terminal may automatically identify an object of interest based on predefined characteristics of a target object interest that the mobile terminal is configured to identify. The mobile terminal may store a portion of the original camera image around the identified object of interest. For example, the mobile terminal may store a portion of the original camera image around the identified object of interest corresponding to the portion of the original camera image within a selection area. According to exemplary embodiments of the present invention, the mobile terminal may determine an offset of the object of interest. The offset may correspond to a location offset of the object of interest relative to the original camera image and may be represented in coordinates (e.g., x,y Cartesian coordinates). For example, the object of interest's position offset relative to the camera's optical axis may be calculated based on the offset of the object. The mobile terminal may store the offset of the object of interest.

At step 130, the mobile terminal receives data from at least one sensor operatively connected thereto. The at least one sensor may monitor or detect at least one of a movement and a change position of the mobile terminal. According to exemplary embodiments of the present invention, the at least one sensor may include a gyroscope, an accelerometer, a magnetometer, a barometer, and the like.

At step 140, the mobile terminal detects a movement or a change in position of the mobile terminal. For example, the mobile terminal may detect a movement or a change in a position of the mobile terminal based on data received from the at least one sensor. For example, the data received from the at least one sensor may be used to calculate a new direction of the mobile terminal (e.g., the camera). When a user moves or turns the camera, data from at least one sensor such as an accelerometer and gyroscope is used to determine the new direction of the camera's optical axis.

At step 150, the data from the at least one sensor may be stored in association with a corresponding camera image (e.g., a frame) such that the camera images have associated position data. The association between the data from the at least one sensor and the corresponding camera image may be as a function of time. As another example, the mobile terminal may store calculated position data corresponding to the position of the camera's optical axis in association with the corresponding camera images. The association between the calculated position data and the corresponding camera images may be as a function of time.

At step 160, the mobile terminal may determine a position of the object of interest in subsequent captured camera images (e.g., subsequent frames) based on the movement or position data and the offset of the object of interest in the original camera image. As another example, the position of the object of interest in subsequent captured camera images may be determined based movement or position data relative to an offset of the object of interest in a previously captured camera image (e.g., the mobile terminal may track the location of the object of interest using relative movement or position data from the movement and/or position of the camera optical axis or object of interest in a preceding captured camera image (e.g., frame). According to exemplary embodiments of the present invention, the determination of the position of the object of interest in subsequent captured camera image may be an approximation of a location the object of interest using information associated with the movement and/or position of the mobile terminal in conjunction with an offset of the object of interest in the original camera image or with an offset of the object of interest in a preceding camera image. The approximate location (e.g., position) of the object of interest may be based on the new direction of the optical axis and the camera's characteristics (e.g., resolution, field of view, focal distance, and the like). This approximation may provide for a relatively accurate approximation of the location of the object of interest. The mobile terminal may thereafter analyze the portion of the corresponding camera image that corresponds to the approximate location of the object of interest and perform a statistical analysis to determine the precise location of the object of interest in the camera image. For example, the mobile terminal may compare the portion of the camera image corresponding to the approximate location of the object of interest with the stored portion of the original camera image corresponding to the object of interest to more efficiently and effectively match the camera image with the original camera image so as to determine the present location of the object of interest. Accordingly, the x,y position of an object of interest is refined using a convolution map of an earlier stored image crop (e.g., corresponding to the stored portion of the original camera image associated with the object of interest) and a neighborhood around a new approximate x,y location. According to exemplary embodiments of the present invention, the mobile terminal may iteratively approximate the location (e.g., position) of the object of interest so as to precisely determine the location of the object of interest in a captured image.

At step 170, the mobile terminal processes the captured image. Such processing may be post-production (e.g., after the camera images are captured and stored), or in real-time (e.g., as the camera images are captured) depending on whether the mobile terminal processes the camera images and locates the object of interest in the camera images substantially as the camera images are captured. As an example, the camera images may be processed so as to include effects such as blurring, overlays, coloring in the location of the object of interest. If the mobile terminal performs such processing post-production (e.g., after the camera images are captured and stored), the mobile terminal may automatically iteratively apply the processing to each camera image (e.g., each frame) in the portion thereof corresponding to the object of interest. According to exemplary embodiments of the present invention, the data from the at least one sensor which is stored in association with the corresponding camera image may be used to efficiently apply post-production processing to objects of interest. Such post-production processing is not limited to objects of interest identified before or during capture of the camera images, but may also be applied to objects of interest identified after image capture.

In accordance with an aspect of the present invention, a method for object tracking during image capture is provided. The method includes identifying an object of interest in an original camera image, detecting movement of a mobile terminal performing image capture, and tracking the object of interest in subsequent camera images using the detected movement of the mobile terminal.

In an exemplary implementation, the identifying of the object of interest in the original camera image may receiving user selection through a touchscreen displaying the camera image.

In an exemplary implementation, the identifying of the object of interest in the original camera image may automatically selecting the object of interest based on predefined characteristics of a target object of interest.

In an exemplary implementation, the detecting of movement of the mobile terminal may receiving data from at least one sensor.

In an exemplary implementation, the at least one sensor is configured to monitor at least one of a movement and a change in position of the mobile terminal.

In an exemplary implementation, the at least one sensor may at least one of a gyroscope, an accelerometer, a magnetometer, and a barometer.

In an exemplary implementation, the method for object tracking during image capture may further include storing information associated with the movement of the mobile terminal.

In an exemplary implementation, the storing of the information associated with the movement of the mobile terminal may associating the information associated with the movement of the mobile terminal with a corresponding camera image.

In an exemplary implementation, the associating of the information associated with the movement of the mobile terminal with the corresponding camera image is performed on the basis of time.

In an exemplary implementation, the method for object tracking during image capture may further include storing a portion of the original camera image around the identified object of interest.

In an exemplary implementation, the method for object tracking during image capture may further include determining an offset of the object of interest.

In an exemplary implementation, the tracking of the object of interest in subsequent camera images using the detected movement of the mobile terminal may include determining a position of the subsequent camera images relative to at least one of the original camera image and a previous camera image and locating the object of interest.

In an exemplary implementation, the locating of the object of interest may determining a position of the object of interest using an offset of the object of interest in at least one of the original camera image and a previous camera image.

In an exemplary implementation, the locating the object of interest may approximating a location of the object of interest in subsequent camera images using information associated with the movement of the mobile terminal in conjunction with an offset of the object of interest in the original camera image.

In an exemplary implementation, the locating the object of interest may include analyzing a portion of a subsequent camera image around the approximated location of the object of interest and comparing such a portion with a stored portion of the original camera image around the identified object of interest.

In an exemplary implementation, the method for object tracking during image capture may further include performing a processing on the object of interest throughout the subsequent camera images.

In an exemplary implementation, the object of interest throughout the subsequent camera images is processed automatically.

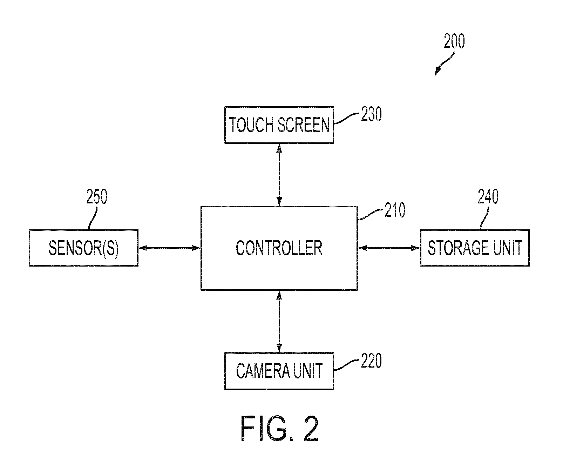

FIG. 2 is a block diagram schematically illustrating a configuration of a mobile terminal according to an exemplary embodiment of the present invention.

Referring to FIG. 2, the mobile terminal 200 includes a controller 210, a camera unit 220, a touchscreen 230, a storage unit 240, and at least one sensor 250.

According to exemplary embodiments of the present invention, the mobile terminal 200 may be configured to capture camera images and to track and locate identified objects of interest based on the movement or change in position of the mobile terminal 200. Data associated with the movement or change in position of the mobile terminal 200 may be stored in association with a corresponding camera image to facilitate efficient and effective image processing to the portions of the camera images corresponding to the object of interest.

The camera unit 220 may be configured to capture camera images. For example, the camera unit 220 may capture preview images, still images, and video images. The camera unit 220 may be controlled by the controller 210. Such control may be based on user input through a camera application loaded on the mobile terminal 200.

The touchscreen 230 may be configured to receive user input through a touch input. A user may control the mobile terminal 200, and in particular a camera application and the camera unit 220 through touch inputs to the touchscreen 230. As an example, the user may load the camera application, select a method of image capture, identify objects of interest, and control image processing through touch inputs to the touchscreen 230.

The storage unit 240 can store user data, and the like, as well a program which performs operating functions according to an exemplary embodiment of the present invention. For example, the storage unit 240 may store a program for controlling general operation of a mobile terminal 200, an Operating System (OS) which boots the mobile terminal 200, and application program for performing other optional functions such as a camera function, a sound replay function, an image or video replay function, a Near Field Communication (NFC) function, an image processing function, and the like. Further, the storage unit 240 may store user data generated according to a user of the mobile terminal, such as, for example, a text message, a game file, a music file, a movie file, and the like. In particular, the storage unit 240 according to exemplary embodiments of the present invention may store a captured camera images, data received by the at least one sensor 250, location and position information of the object of interest, and the like.

The touchscreen 230 displays information inputted by user or information to be provided to user as well as various menus of the mobile terminal 200. For example, the touchscreen 230 may provide various screens according to a user of the mobile terminal 200, such as an idle screen, a message writing screen, a calling screen, and the like. In particular, the touchscreen 230 according to exemplary embodiments of the present invention can display a graphical user interface associated with an application within which the user may input a touch input or swipe for selecting various camera functions, selecting various image processing functions, and for selecting and/or identifying objects of interest. The touchscreen 230 can be formed as a Liquid Crystal Display (LCD), an Organic Light Emitting Diode (OLED), an Active Matrix Organic Light Emitting Diode (AMOLED), and the like.

The at least one sensor 250 may detect and/or monitor a movement or change in position of the mobile terminal 250. As an example, the at least one sensor 250 may include a gyroscope, an accelerometer, a magnetometer, a barometer, and the like.

According to exemplary embodiments of the present invention, the mobile terminal comprises at least one controller 210. The at least one controller 210 may be configured to operatively control the mobile terminal 200. For example, the controller 210 may control operation of the various components or units included in the mobile terminal 200. The controller 210 may transmit a signal to the various components included in the mobile terminal 200 and control a signal flow between internal blocks of the mobile terminal 200. In particular, the controller 210 according to exemplary embodiments of the present invention can control to identify an object of interest in an original camera image, to detect movement of the mobile terminal 200; and to track the object of interest in subsequent camera images using the detected movement of the mobile terminal 200. The controller 210 may also control to receive data from the at least one sensor 250, to detect movement of the mobile terminal 200 based on the data received from the at least one sensor 250, to operatively store to the storage unit 240 information associated with the movement of the mobile terminal 200, to associate the information associated with the movement of the apparatus with a corresponding camera image, to track the object of interest in subsequent camera images by determining a position of the subsequent camera images relative to original the camera image, and by locating the object of interest, and to perform an image processing on the object of interest throughout the subsequent camera images.

In accordance with another aspect of the present invention, an apparatus for object tracking during image capture is provided. The apparatus includes a touchscreen configured to receive a touch input, a camera unit configured to capture a camera image, and at least one controller configured to identify an object of interest in an original camera image, to detect movement of the apparatus, and to track the object of interest in subsequent camera images using the detected movement of the apparatus.

In an exemplary implementation, the at least one controller is configured to identify the object of interest in the original camera image based on receiving user selection through the touchscreen.

In an exemplary implementation, the at least one controller is further configured to automatically select the object of interest based predefined characteristics of a target object of interest.

In an exemplary implementation, the apparatus for object tracking during image capture may further include at least one sensor, wherein the at least one controller is further configured to receive data from the at least one sensor, and wherein the at least one controller detects movement of the apparatus based on the data received from the at least one sensor.

In an exemplary implementation, the at least one sensor is configured to monitor at least one of a movement and a change in position of the apparatus.

In an exemplary implementation, the at least one sensor includes at least one of a gyroscope, an accelerometer, a magnetometer, and a barometer.

In an exemplary implementation, the apparatus for object tracking during image capture may further include a storage unit, wherein the at least one controller is configured to operatively store to the storage unit information associated with the movement of the apparatus.

In an exemplary implementation, the at least one controller associates the information associated with the movement of the apparatus with a corresponding camera image.

In an exemplary implementation, the at least one controller associates the information associated with the movement of the mobile terminal with the corresponding camera image on the basis of time.

In an exemplary implementation, the apparatus for object tracking during image capture may further include a storage unit, wherein the at least one controller operatively stores a portion of the original camera image around the identified object of interest.

In an exemplary implementation, the at least one controller determines an offset of the object of interest.

In an exemplary implementation, the at least one controller tracks the object of interest in subsequent camera images by determining a position of the subsequent camera images relative to original the camera image, and by locating the object of interest.

In an exemplary implementation, the at least one controller locates the object of interest by determining a position of the object of interest using an offset of the object of interest in at least one of the original camera image and a previous camera image.

In an exemplary implementation, the at least one controller locates the object of interest by approximating a location of the object of interest in subsequent camera images using information associated with the movement of the apparatus in conjunction with an offset of the object of interest in at least one of the original camera image and a previous camera image.

In an exemplary implementation, the locating of the object of interest further comprises the at least one controller analyzing a portion of a subsequent camera image around the approximated location of the object of interest and comparing such a portion with a stored portion of the original camera image around the identified object of interest.

In an exemplary implementation, the at least one controller is further configured to perform a processing on the object of interest throughout the subsequent camera images.

In an exemplary implementation, the at least one controller performs the processing on the object of interest throughout the subsequent camera images automatically.

determining whether a received information (e.g., including pairing information) corresponds to a request to pair the mobile terminal with at least one other mobile terminal, to extract pairing information, to receive an indication that the mobile terminal wants to pair with at least one other mobile terminal, and to operatively connect the mobile terminal with at least one other mobile terminal.

As a non-exhaustive illustration only, a terminal described herein may refer to mobile devices such as a cellular phone, a Personal Digital Assistant (PDA), a digital camera, a portable game console, and an MP3 player, a Portable/Personal Multimedia Player (PMP), a handheld e-book, a portable lap-top Personal Computer (PC), a tablet PC, a Global Positioning System (GPS) navigation, and the like capable of wireless communication or network communication consistent with that disclosed herein.

Program instructions to perform a method described herein, or one or more operations thereof, may be recorded, stored, or fixed in one or more computer-readable storage media. The program instructions may be implemented by a computer. For example, the computer may cause a processor to execute the program instructions. The media may include, alone or in combination with the program instructions, data files, data structures, and the like. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions, that is, software, may be distributed over network coupled computer systems so that the software is stored and executed in a distributed fashion. For example, the software and data may be stored by one or more computer readable recording mediums. Also, functional programs, codes, and code segments for accomplishing the example embodiments disclosed herein can be easily construed by programmers skilled in the art to which the embodiments pertain based on and using the flow diagrams and block diagrams of the figures and their corresponding descriptions as provided herein. Also, the described unit to perform an operation or a method may be hardware, software, or some combination of hardware and software. For example, the unit may be a software package running on a computer or the computer on which that software is running.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for object tracking during image capture, the method comprising:
identifying an object of interest in an original camera image;
detecting movement of a mobile terminal performing image capture; and
tracking the object of interest in subsequent camera images using the detected movement of the mobile terminal.

2. The method of claim 1, wherein the identifying of the object of interest in the original camera image comprises:
automatically selecting the object of interest based on predefined characteristics of a target object of interest.

3. The method of claim 1, wherein the detecting of movement of the mobile terminal comprises:
receiving data from at least one sensor, wherein the at least one sensor is configured to monitor at least one of a movement and a change in position of the mobile terminal.

4. The method of claim 1, further comprising:
storing information associated with the movement of the mobile terminal.

5. The method of claim 4, wherein the storing of the information associated with the movement of the mobile terminal comprises:
associating the information associated with the movement of the mobile terminal with a corresponding camera image.

6. The method of claim 1, wherein the tracking of the object of interest in subsequent camera images using the detected movement of the mobile terminal comprises:
determining a position of the subsequent camera images relative to at least one of the original camera image and a previous camera image; and
locating the object of interest.

7. The method of claim 1, further comprising:
performing a processing on the object of interest throughout the subsequent camera images.

8. An apparatus for object tracking during image capture, the apparatus comprising:
a touchscreen configured to receive a touch input;
a camera unit configured to capture a camera image; and
at least one controller configured to identify an object of interest in an original camera image, to detect movement of the apparatus, and to track the object of interest in subsequent camera images using the detected movement of the apparatus.

9. The apparatus of claim 8, wherein the at least one controller is configured to identify the object of interest in the original camera image based on receiving user selection through the touchscreen.

10. The apparatus of claim 8, wherein the at least one controller is further configured to automatically select the object of interest based predefined characteristics of a target object of interest.

11. The apparatus of claim 8, further comprising:
at least one sensor,
wherein the at least one controller is further configured to receive data from the at least one sensor, and
wherein the at least one controller detects movement of the apparatus based on the data received from the at least one sensor,
wherein the at least one sensor is configured to monitor at least one of a movement and a change in position of the apparatus.

12. The apparatus of claim 8, further comprising:
a storage unit,
wherein the at least one controller is configured to operatively store to the storage unit information associated with the movement of the apparatus.

13. The apparatus of claim 12, wherein the at least one controller associates the information associated with the movement of the apparatus with a corresponding camera image.

14. The apparatus of claim 8, wherein the at least one controller tracks the object of interest in subsequent camera images by determining a position of the subsequent camera images relative to original the camera image, and by locating the object of interest.

15. The apparatus of claim 8, wherein the at least one controller is further configured to perform a processing on the object of interest throughout the subsequent camera images.
